# DEMANDE DE BREVET EUROPEEN

(11) **EP 0 967 704 A1**
(43) Date de publication de la demande: **29.12.1999**
(21) Numéro de dépôt: 99401495.9
(22) Date de dépôt: 16.06.1999
(51) Int. Cl.: H02G 5/06, H02G 5/00

(54) **Ligne électrique à isolation gazeuse comportant deux barres conductrices reliées électriquement par une liaison souple**

(30) Priorité: 25.06.1998 FR 9808064
(71) Demandeur: Alstom France SA, 75116 Paris (FR)
(72) Inventeur: Thuries, Edmond, 69330 Pusignan (FR)
(74) Mandataire: Gosse, Michel

(57) **Abrégé**

La ligne électrique comprend une première (11) et une deuxième (21) barres conductrices tubulaires reliées électriquement, la première barre (11) ayant une extrémité (11A) qui est emboîtée dans une extrémité (21A) de la deuxième barre (21) pour permettre un coulissement relatif des deux barres suivant une direction axiale (A).

Les deux barres (11, 21) sont reliées électriquement par une liaison souple (3) qui se déforme sans frottement sur l'une ou l'autre des extrémités (11A, 21A), ce qui permet d'éviter la production de particules d'usure lors de mouvements créés par la dilatation thermique des deux barres conductrices (11, 21).

Selon une réalisation particulière, la première barre (11) est emboîtée dans la deuxième barre (21) par l'intermédiaire d'une virole (5) qui coulisse par rapport à la deuxième barre (21) et qui est appuyée contre la première barre (11) par un ressort (4) comprimé par un capot pare effluves (9) solidiare de la deuxième barre (21), ce qui permet un raccord des barres par encliquetage sans vissage.

## Description

L'invention se rapporte à une ligne électrique à isolation gazeuse comprenant au moins une première et une deuxième barres conductrices tubulaires reliées électriquement, la première barre ayant une extrémité qui est emboîtée dans une extrémité de la deuxième barre pour permettre un coulissement relatif des deux barres suivant une direction axiale.

D'une manière connue, l'extrémité de la première barre porte un contact glissant pour relier électriquement les deux barres conductrices tout en permettant un mouvement relatif des deux barres dans la direction axiale sous l'action de la dilatation thermique.

Une telle ligne à isolation gazeuse se révèle non dépourvue d'inconvénients. D'une part, le contact glissant est d'un coût relativement élevé. D'autre part, on observe fréquemment, après un certain temps de service, la présence de particules métalliques dans le gaz diélectrique contenu sous pression dans la linge électrique, et notamment dans la zone d'emboîtage.

Ces particules proviennent de l'usure par frottement du contact glissant aux cours des mouvements répétés et de sens opposés créés par la dilatation thermique des deux barres conductrices. L'usure est accélérée par le fait que le contact glissant est traversé par un courant de ligne de plusieurs kiloampères.

Une solution à ce problème est divulguée par le document DE-A-2603040 où les extrémités des barres conductrices d'une ligne électrique sont interconnectées par l'intermédiaire d'une bande métallique souple qui est fixée par vis sur des collets qui terminent ces barres.

Cette solution est également exploitée dans le document US-A-3636233 où les extrémités des barres conductrices d'une ligne électrique sont elles interconnectées par l'intermédiaire de conducteurs plats tressés qui y sont fixés par des bandes et soudés ou brasés. Pour des raisons d'isolement électrique, il y est de plus prévu un écran pare-effluves qui est fixé sur les barres conductrices au niveau des conducteurs plats tressés qu'il entoure.

L'idée de base selon l'invention est de dissocier le mouvement relatif des barres conductrices qu'occasionne la dilatation thermique et le passage du courant électrique entre les barres, comme prévu dans les documents de l'art antérieur et de permettre un raccordement fiable, plus simple à réaliser et à mettre en oeuvre.

L'invention a donc pour objet une ligne électrique à isolation gazeuse comprenant une première barre conductrice tubulaire emboîtée par une extrémité dans une extrémité d'une deuxième barre conductrice tubulaire de manière à permettre un coulissement relatif de ces deux barres suivant une direction axiale.
Les deux barres sont supposées électriquement reliées par une liaison souple, de type clinquant métallique ou tresse de fils électriques, protégée par un capot pare-effluves.

La liaison électrique souple est par exemple fixée par vis à la deuxième barre conductrice et à la virole pour se déformer sans frottement sur l'un ou l'autre de ces deux éléments lors de leur déplacement relatif sous l'action de la dilatation thermique des deux barres conductrices.

Selon une caractéristique de l'invention, l'extrémité de la seconde barre est formée par un évasement cylindrique formant le capot pare-effluves et la liaison souple est fixée, d'une part, à cet évasement et, d'autre part, à l'extrémité par laquelle la première barre est emboîtée.

Selon une caractéristique d'une variante de réalisation selon l'invention, la première barre est emboîtée dans la deuxième barre par l'intermédiaire d'une virole qui coulisse par rapport à cette deuxième barre et qui est appuyée contre la première barre par un ressort comprimé par le capot pare-effluves que porte la seconde barre. A cet effet, l'invention a pour objet une ligne électrique à isolation gazeuse comprenant au moins une première et une deuxième barres conductrices tubulaires reliées électriquement, la première barre ayant une extrémité qui est emboîtée dans une extrémité de la deuxième barre pour permettre un coulissement relatif des deux barres suivant une direction axiale, caractérisée en ce que les deux barres sont reliées électriquement par une liaison souple.

La liaison électrique souple se déforme sans frottement sur l'une ou l'autre des extrémités emboîtées lors du déplacement relatif des deux barres sous l'action de la dilatation thermique. Il en résulte une augmentation de la durée de vie du raccord ainsi qu'une suppression de la production de particules métalliques due à l'usure par frottement d'un contact glissant.

De préférence, la liaison électrique souple est constituée d'un clinquant métallique ou d'une tresse de fils électriques, et est protégée par un capot pare effluves solidaire de la deuxième barre pour la protéger de champs électriques parasites.

Selon un premier avantage de l'invention, la première barre est emboîtée dans la deuxième barre par l'intermédiaire d'une virole qui coulisse par rapport à la deuxième barre et qui est fixée par vis à la première barre de façon telle que les vis sont orientées parallèlement à la direction axiale pour faciliter l'emboîtage des deux barres de la ligne à isolation gazeuse.

Selon un deuxième avantage de l'invention, la première barre est emboîtée dans la deuxième barre par l'intermédiaire d'une virole qui coulisse par rapport à la deuxième barre et qui est appuyée contre la première barre par un ressort comprimé par le capot pare effluves pour permettre un emboîtage simple sans vissage.

D'autres caractéristiques et avantages de l'invention apparaîtront à la lecture de la description des trois exemples de réalisation de l'invention illustrés par les dessins.

La figure 1 est une coupe schématique d'une ligne électrique à isolation gazeuse comprenant deux barres conductrices, dans laquelle un clinquant métallique assure une liaison électrique souple entre les deux barres.

La figure 2 est une demi-vue schématique d'une ligne électrique à isolation gazeuse comprenant deux barres conductrices, dans laquelle une virole est vissée à l'une des deux barres.

La figure 3 est une demi-vue schématique d'une ligne électrique à isolation gazeuse comprenant deux barres conductrices, dans laquelle une virole est appuyée contre la première barre par un ressort comprimé par un capot pare effluves solidaire de la deuxième barre.

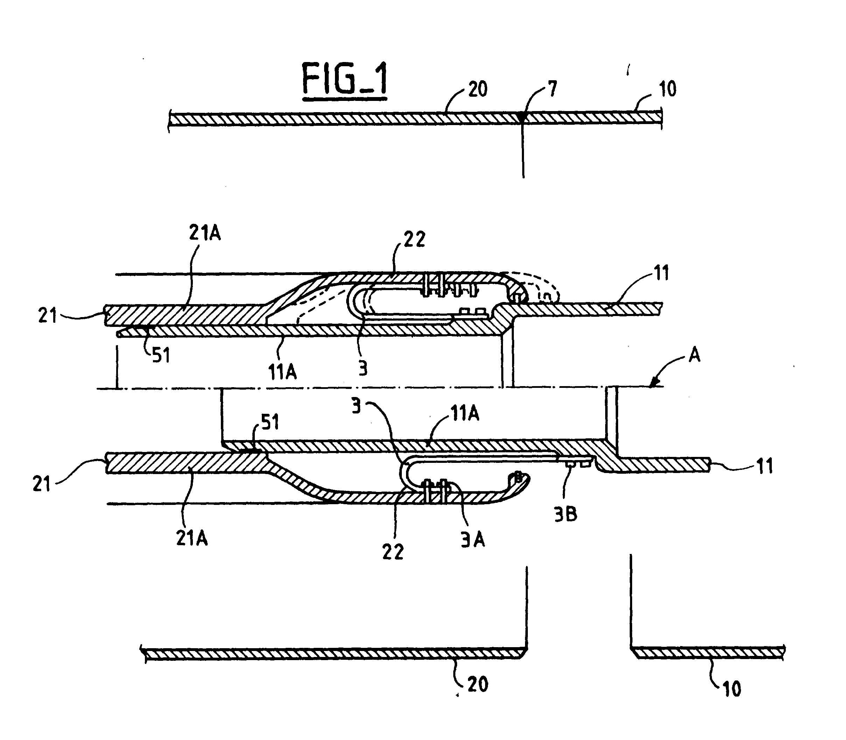

Une ligne électrique à isolation gazeuse comprend, figure 1, une première 11 et une deuxième 21 barres conductrices tubulaires disposées solidairement à l'intérieur d'une enveloppe 10 ou 20 suivant une direction axiale A. La première barre 11 possède une extrémité 11A qui s'emboîte dans une extrémité 21A de la deuxième barre 21 pour permettre un coulissement relatif des deux barres suivant la direction axiale A par l'intermédiaire d'un guidage annulaire 51.

La ligne électrique à isolation gazeuse est destinée à contenir entre les enveloppes extérieures 10 et 20 et les barres conductrices tubulaires 11 et 21, un gaz diélectrique sous pression, comme de l'azote N₂ ou de l'hexafluorure de soufre SF₆, ou encore un mélange de ces deux gaz ou de tout autre gaz ayant de bonnes propriétés diélectriques. Il faut noter que chaque barre conductrice peut atteindre une longueur typique de 100 mètres dans un tronçon de ligne.

Selon l'invention, un clinquant métallique 3 est vissé d'une part, à un évasement cylindrique 22 formant un capot effluves solidaire de l'extrémité 21A de la deuxième barre conductrice 21, et d'autre part, à l'extrémité 11A de la première barre conductrice 11.

Le clinquant métallique 3 est vissé à l'évasement cylindrique 22 de la deuxième barre conductrice 21 à l'aide de vis 3A, et à l'extrémité 11A de première la barre conductrice 11, à l'aide de vis 3B, pour se déformer sans frottement sur l'un ou l'autre de ces deux éléments 22 et 11A.

Comme indiqué précédemment, la liaison souple 3 permet d'éviter la production de particules d'usure lors du déplacement relatif des deux barres conductrices 11 et 21 sous l'action de la dilatation thermique. Il en résulte une augmentation de la durée de vie de la ligne électrique, ainsi qu'une suppression de la pollution du gaz diélectrique contenu sous pression à l'intérieur de la ligne.

Pour former la liaison électrique souple entre les deux barres conductrice 11 et 21, il est prévu également d'utiliser une tresse de fils électriques.

Le raccord des deux barres conductrices 11 et 21 de la ligne à isolation gazeuse est simple à mettre en oeuvre.

Dans la partie inférieure de la figure 1, on a représenté en demi-vue les deux barres conductrices 11 et 21 avant le raccord. Un opérateur agissant par l'intermédiaire d'une boîte à gants montée sur les enveloppes extérieures 10 et 20 pour prévenir une introduction de poussières extérieures, actionne une clé à tube pour visser la paire de vis de serrage 3B du clinquant 3 sur l'extrémité 11A de la première barre conductrice 11. De cette façon, l'opération de vissage est effectuée sans pollution du volume destiné à contenir le gaz diélectrique de la ligne.

A la fin du vissage, les deux barres conductrices 11 et 21 sont rapprochées l'une de l'autre parallèlement à la direction axiale A par l'intermédiaire des deux enveloppes 10 et 20 qui sont soudées 7 l'une à l'autre.

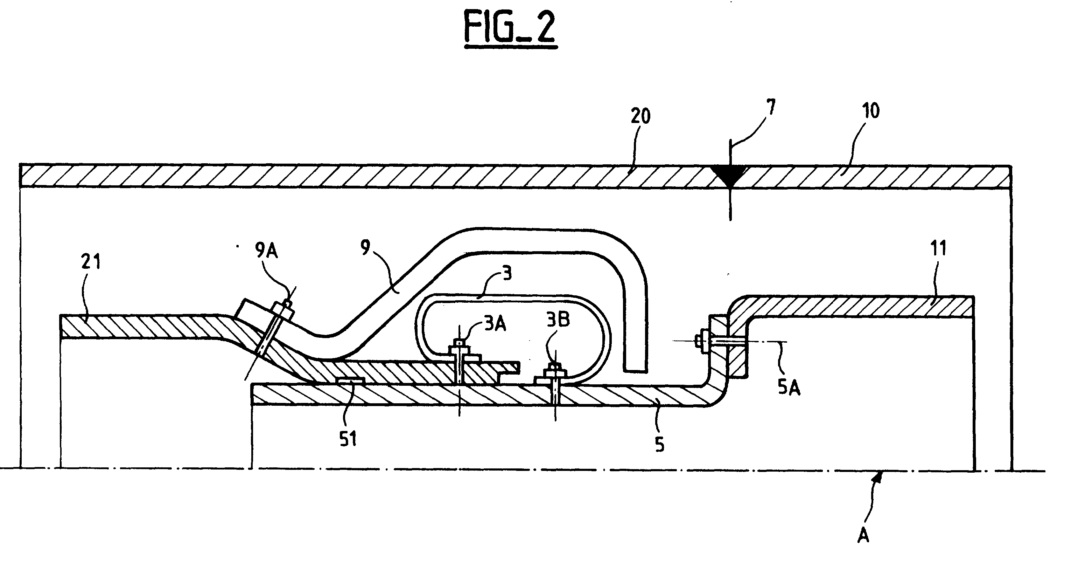

Selon un mode de réalisation avantageux de l'invention, figure 2, la première barre 11 est emboîtée dans la deuxième barre 21 par l'intermédiaire d'une virole 5 qui coulisse par rapport à la deuxième barre 21 et qui est fixée par des vis 5A à la première barre 11 de façon telle que les vis 5A sont orientées parallèlement à la direction axiale A.

Le clinquant métallique 3 est vissé à l'aide de vis 3A à la deuxième barre conductrice 21, et à l'aide de vis 3B, à la virole 5. Un capot pare effluve 9 est également fixé en 9A sur la deuxième barre conductrice 21 et est recourbé au dessus de la liaison électrique souple 3 pour la protéger des perturbations électriques.

Pour raccorder les deux barres conductrices 11 et 21, l'opérateur fait coulisser la virole 5 par rapport à la deuxième barre conductrice 21 pour l'appuyer contre la première barre conductrice 11. Il serre ensuite les vis de serrage 5A à l'aide d'une clé en prise avec la tête de chaque vis.

Ces vis de serrage 5A sont orientées parallèlement à la direction axiale A pour faciliter le serrage par un arc de rotation de la clé dans un plan perpendiculaire à la direction axiale produisant un couple de serrage important.

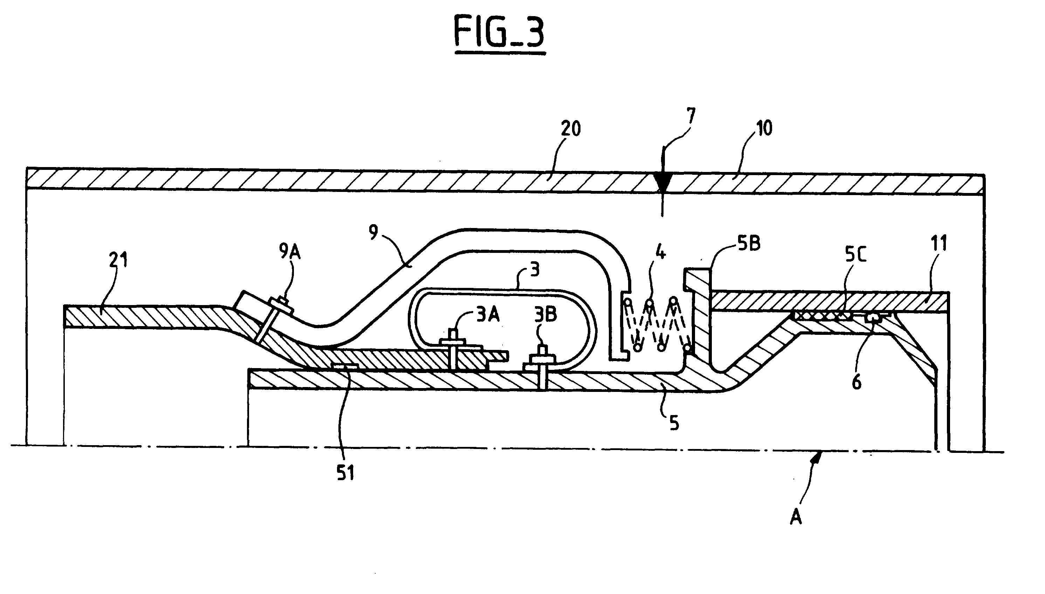

Selon un autre mode de réalisation avantageux de l'invention, figure 3, la première barre 11 est emboîtée dans la deuxième barre 21 par l'intermédiaire d'une virole 5 qui coulisse par rapport à la deuxième barre 21 et qui est appuyée contre la première barre 11 par un ressort 4 comprimé par le capot pare effluves 9 solidaire de la deuxième barre conductrice 21.

Comme dans l'exemple de la figure 2, le clinquant métallique 3 est vissé à l'aide de vis 3A à la deuxième barre conductrice 21, et à l'aide de vis 3B, à la virole 5. Un capot pare effluve 9 est également vissé en 9A sur la deuxième barre conductrice 21 et est recourbé au dessus de la liaison électrique souple 3 pour la protéger des perturbations électriques.

Le ressort 4 est monté entre le capot pare effluves 9 et une face d'une couronne radiale 5B de la virole 5, pour que, lorsque les deux barres conductrices sont rapprochées de façon coaxiale et que leurs enveloppes respectives 10 et 20 sont soudées 7 l'une à l'autre, le ressort 4 se comprime et appuie la couronne radiale 5B en la plaquant contre la première barre conductrice 11 de façon à lier le déplacement axial de ces deux éléments sous l'action de la dilatation thermique des barres conductrices 1 1 et 21.

Dans ce mode de réalisation, le raccord des deux barres conductrices 11 et 21 ne nécessite pas de vissage mais s'obtient par encliquetage simple et rapide. L'opérateur n'a pas à intervenir à l'intérieur des enveloppes extérieures 10 et 20, ce qui élimine tout risque de pollution.

Le contact électrique entre la virole 5 et la première barre conductrice 11 est assuré par l'intermédiaire de la couronne radiale 5B plaquée contre cette barre conductrice 11 par la force de compression du ressort 4.

De préférence, pour conférer une plus grande sécurité au raccord, la virole coulissante 5 porte un contact 5C glissant par rapport à la première barre conductrice 11. Il faut noter en accord avec le but de l'invention indiqué précédemment, que le glissement du contact 5C n'est plus possible dès que la première barre conductrice 11 et la virole 5 sont liées en déplacement par l'intermédiaire du ressort comprimé 4, de sorte que seul un glissement a lieu lors du raccord des deux barres conductrices, pendant l'opération d'assemblage.

La production de particules métalliques par frottement est donc extrêmement limitée. On prévoit de disposer un joint 6 entre la virole 5 et la première barre conductrice 11 pour prévenir toute pollution du gaz diélectrique par ces particules.

L'invention est dédiée aux lignes à isolation gazeuse de moyenne ou de haute tension.

## Revendications

1. Une ligne électrique à isolation gazeuse comprenant au moins une première barre conductrice tubulaire (11) emboîtée par une extrémité dans une extrémité d'une deuxième barre conductrice tubulaire (21) de manière à permettre un coulissement relatif de ces barres suivant une direction axiale (A), ces deux barres étant reliées électriquement par une liaison souple (3), de type clinquant métallique ou tresse de fils électriques, protégée par un capot pare-effluves, caractérisée en ce que l'extrémité de la seconde barre est formée par un évasement cylindrique (22) formant le capot pare-effluves et en ce que la liaison souple est fixée, d'une part, à cet évasement et, d'autre part, à l'extrémité par laquelle la première barre est emboîtée.

2. Une ligne électrique à isolation gazeuse comprenant au moins une première barre conductrice tubulaire (11) emboîtée par une extrémité dans une extrémité d'une deuxième barre conductrice tubulaire (21) de manière à permettre un coulissement relatif de ces barres suivant une direction axiale (A), ces deux barres étant reliées électriquement par une liaison souple (3), de type clinquant métallique ou tresse de fils électriques protégée par un capot pare-effluves (9), caractérisée en ce que la première barre est emboîtée dans la deuxième barre par l'intermédiaire d'une virole (5) qui coulisse par rapport à cette deuxième barre (21) et qui est appuyée contre la première barre par un ressort (4) comprimé par le capot pare-effluves que porte la seconde barre.

3. Une ligne électrique à isolation gazeuse selon la revendication 2, dans laquelle la virole (5) porte un contact (5C) glissant par rapport à la première barre conductrice (11).
